# EUROPÄISCHE PATENTSCHRIFT

(11) **EP 1 195 667 B1**
(45) Veröffentlichungstag und Bekanntmachung des Hinweises auf die Patenterteilung: **06.08.2003**
(21) Anmeldenummer: 00128662.4
(22) Anmeldetag: 28.12.2000
(51) Int. Cl.: G05B 19/414

(54) **Universelle Bewegungssteuerung**
Universal motion control
Commande cinématique universelle

(30) Priorität: 10.01.2000 DE 10000626
(43) Veröffentlichungstag der Anmeldung: 10.04.2002
(73) Patentinhaber: SIEMENS AKTIENGESELLSCHAFT, 80333 München (DE)
(72) Erfinder: Kiesel, Martin, Dipl.-Ing., 91099 Poxdorf (DE); Morgenroth, Maria, 96193 Wachenroth (DE); Steinlein, Georg, Dipl.-Ing. FH, 95448 Bayreuth (DE)

(56) Entgegenhaltungen:
- DE-A- 19 740 550
- DE-U- 29 600 609
- US-A- 5 877 959

## Beschreibung

Die Erfindung bezieht sich auf eine universelle Bewegungssteuerung mit Engineering- und Run-Time-System, welche funktionell die klassischen Aufgaben einer speicherprogrammierbaren Steuerung und einer numerischen Steuerung in sich vereinigt.

Es ist heutzutage üblich, sowohl für die speicherprogrammierbare Steuerung als auch für die Bewegungssteuerung jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Es ist bekannt, daß bei einer speicherprogrammierbaren Steuerung "SPS", also auch bei einer Bewegungssteuerung "NC", Anwenderprogramme bzw. vom Anwender erstellte Tasks in den Speicher der jeweiligen Steuerung zugeladen und zur Ausführung gebracht werden können.

Aus der DE 197 40 550 A1 ist es bekannt, daß Prozeßsteuerungsfunktionalitäten der speicherprogrammierbaren Steuerungen "SPS" und Bewegungsfunktionalitäten von NC-Steuerung in einem einheitlichen konfigurierbaren Steuerungssystem integriert werden können.

Diese SPS/NC-Integration geschieht in Form des Zusammenschaltens von SPS- und NC-Steuerungsbaugruppen. Bei einer solchen Ausführung der Integration wird aber keine optimale und effiziente Taskstruktur für die Gesamtheit der Steuerungsaufgaben erreicht. Außerdem kann bezüglich der Prozeßsteuerung, also auch bezüglich der Bewegungssteuerung, erweiternde Funktionalität nur in Form von Anwenderprogrammen nachgeladen und zur Ausführung gebracht werden.

Es ist heutzutage üblich, Steuerungen mit Parametrierinformationen zu versorgen.

Parametrierinformationen umfassen in diesem Zusammenhang
- die Beschreibung von Systemvariablen mit Datentyp, Attributen und Beschreibungstexten,
- die Beschreibung von Alarmen, mit ihrem strukturellen Aufbau, Attributen und Alarmtexten, sowie
- die Beschreibung von Sprachbefehlen (Bewegungs- und Technologiebefehle) mit Syntax und dazugehörigen Parametern.

Üblicherweise werden aber diese Parametrierinformationen, die an unterschiedlichen Stellen innerhalb der Steuerung benötigt werden, jeweils separat an diesen Stellen in der Steuerung implementiert. Die Konsistenz dieser verteilt implementierten Parametrierinformationen ist nur sehr aufwendig sicherstellbar.

Der Erfindung liegt daher die Aufgabe zugrunde, für jeweils unterschiedliche Steuerungsaufgaben und unterschiedliche Randbedingungen bzw. Anforderungen des zugrundeliegenden technischen Prozesses in einfacher Weise optimale Ausprägungen der kombinierten SPS/NC-Steuerungen sowohl hinsichtlich ihrer Steuerungsstruktur als auch hinsichtlich ihrer Funktionalität zu erstellen und dabei sicherzustellen, daß die in der Steuerung implementierten Parametrierinformationen immer konsistent zueinander sind.

Gemäß der Erfindung wird diese Aufgabe dadurch gelöst, daß ein einheitliches Ablaufebenenmodell dergestalt gebildet ist, daß es mehrere Ablaufebenen unterschiedlichen Typs mit unterschiedlicher Priorität aufweist, wobei von höchster bis niedrigster Priorität verschiedene Anwender- und Systemebenen vorgesehen sind und daß jeweils Technologiepakete anwenderseitig in das Engineering- und/oder Run-Time-System ladbar sind, daß eine Datenquelle für Beschreibungsinformationen für Systemvariablen sowie gegebenenfalls Alarme und/oder Sprachbefehle über einen Umsetzer dem Engineering-System Sprachbefehle und/oder Systemvariablen zur Verfügung stellt, daß aus dem Run-Time-System die Systemvariablen mit aktuellen Daten des technischen Prozesses versorgbar sind und daß über eine Bedienoberfläche des Engineering-Systems weitere Eingaben anwenderseitig machbar sind.

Ein wesentlicher Vorteil der Erfindung liegt darin, daß die Parametrierinformationen der Steuerung, die sowohl im Engineering-System, im Run-Time-System, aber auch für die Dokumentation und eine etwaige Testautomatisierung benötigt werden, immer konsistent sind. Der Umsetzer, der an zentraler Stelle die Parametrierinformationen für die Dokumentation, das Engineering-System und das Run-Time-System aufbereitet und verteilt, kann ohne großen Aufwand Semantikchecks durchführen. Auch können OEM (Original Equipment Manufacturer)-Kunden in dieser Datenquelle für Beschreibungsinformationen, d.h. an definierter Stelle, aufwandsarm weitere Parametrierinformationen für die Steuerung erstellen und in die Dokumentation einbringen.

Ein weiterer Vorteil der Erfindung liegt darin, daß innerhalb der Ablaufebenen die Tasks der Steuerung so angeordnet werden können, daß der Kommunikationsaufwand innerhalb der Steuerung reduziert wird.

Ein weiterer Vorteil liegt darin, daß anwenderseitig durch die Zuladung von Technologiepaketen in das Engineeringund/oder Run-Time-System der Steuerung eine anwendungsspezifische Skalierung des Run-Time-Systems der Steuerung bezüglich ihrer Funktionalität erreicht werden kann.

Eine erste vorteilhafte Ausgestaltung der Erfindung liegt darin, daß vom Umsetzer aus dem Bestand der Datenquelle relevante Dokumentationsinformationen an ein Ausgabemedium weiterleitbar sind. Dadurch wird sichergestellt, daß alle Dokumentationsinformationen aus einer gemeinsamen Datenquelle stammen und somit immer untereinander konsistent sind, unabhängig, auf welches Ausgabemedium (z.B. Drucker oder Online-Hilfe) die Dokumentationsinformation ausgegeben wird.

Eine weitere vorteilhafte Ausgestaltung der Erfindung liegt darin, daß als Ablaufebenen vorgesehen sind:
a) eine Lagereglerebene, bestehend aus zugehöriger getakteter Systemebene und Anwenderebene,
b) eine Interpolatorebene, bestehend aus zugehöriger getakteter Systemebene und Anwenderebene,
c) eine Event-Systemebene für reaktionspflichtige Ereignisse,
d) eine Anwenderebene für asynchrone Fehler,
e) eine weitere, vom Anwender anforderungsspezifisch frei projektierbare Anwenderebene für Alarm- und/oder Eventund/oder Regelungs- und/oder sonstige zyklische Tasks,
f) eine aus der Abfolge von Bewegungssequenzen, freien Zyklen und niederprioren sonstigen Systemtasks, gebildete Ebenengruppe für Hintergrund-Bearbeitung,
wobei die Ablaufebenen a bis e eine Ebenengruppe für Echtzeit-Bearbeitung bilden.

Ein wesentlicher Vorteil dieser Schichtung liegt darin, daß die Kommunikation zwischen den Tasks der Prozeßsteuerung und denen der Bewegungssteuerung minimiert wird. Dadurch kann die Programmierung der Steuerungsaufgaben für die Prozeßsteuerung und für die Bewegungssteuerung in einer einheitlichen Programmiersprache mit einer einheitlichen Erstelloberfläche erfolgen.

Eine weitere vorteilhafte Ausgestaltung der Erfindung liegt darin, daß die Technologiepakete beinhalten:
a) Code-Teile, die die Regelungsspezifika für das Run-Time-System repräsentieren und
b) einen Konfigurierteil der die Zuordnung dieser Code-Teile zu den jeweiligen Systemebenen, sowie deren Bearbeitungsfolge aufweist, wobei
c) bedarfsweise diese Informationen des Konfigurierteils auch an das Engineering-System weiterleitbar sind.

Somit ist es möglich, daß der Anwender durch dynamisches Zuladen solcher Technologiepakete die Möglichkeit einer technologischen Skalierung des Run-Time-Systems der Steuerung besitzt. Damit kann der Anwender ausgehend von einem Basissystem der Steuerung den Befehlsvorrat dieses Basissystems bzw. Betriebssystems dynamisch zugeschnitten auf die jeweiligen Erfordernisse des zugrundeliegenden technologischen Prozesses oder der Steuerungsaufgabe erweitern. Der Anwender hat somit die Möglichkeit, die vorhandene Grundfunktionalität einer Steuerung gezielt um solche Funktionalitäten zu erweitern, die er wirklich für seine Anwendungen benötigt. Das Basissystem bildet hierbei den Auslieferungsumfang des Run-Time-Systems einer Steuerung, nämlich ein Echtzeitbetriebssystem, ein Ablaufsystem (mit System- und Anwenderebenen), Technologieobjekttypen, Sprachbefehle, den SPS-Befehlsvorrat sowie Kommunikations- (z.B. LAN, E/A) und technologische Schnittstellen (z.B. Antriebe, Geber) zum technischen Prozeß. Im Basissystem befindet sich somit die notwendige Grundfunktionalität einer Steuerung. Das Basissystem ist dabei auf unterschiedlichsten HW-Plattformen (z.B. PC, Antrieb, ...) ablauffähig.

Dadurch, daß die Informationen des Konfigurierteils eines Technologiepaketes über die Datenquelle und den Umsetzer ins Run-Time-System und ins Engineering-System gebracht werden, lassen sich Parametrier- und Konfigurierinformationen in einheitlicher Weise in die Steuerung einbringen und ein Anwender kann an zentraler Stelle Änderungen in den Parametrier- bzw. Konfigurierdaten vornehmen. Die sogenannten Parametrierinformationen entsprechen Datenbeschreibungen für übliche und generelle Steuerungsaspekte, nämlich Systemvariablen, Alarmen und Sprachbefehlen. Die Konfigurierinformationen beziehen sich hingegen auf Technologiepakete und damit auf die Möglichkeit einer technologischen Skalierung einer Steuerung.

Dadurch, daß jedes Technologiepaket eine angepaßte Anzahl von Technologieobjekttypen für das Run-Time-System beinhaltet, ist es möglich, auch komplexe und anspruchsvolle Steuerungsfunktionalitäten in einer übersichtlichen und verständlichen Form dem Run-Time-System zuzuladen.

Eine weitere vorteilhafte Ausgestaltung der Erfindung liegt darin, daß des weiteren Bedienoberflächeninformationen, insbesondere Bedienparameter, und/oder Sprachmechanismen und/oder Deklarationsteile den Code-Teilen zuweisbar sind.

Dadurch ergeben sich folgende Vorteile:

Um einen Technologieobjekttyp nicht nur als nicht mehr änderbare Konstante verwenden zu können, muß der Technologieobjekttyp dem Erstellsystem die Möglichkeiten der Parametrierung für seine instanziierten Technologieobjekte und insbesondere die vorhandenen Bedienparameter bekanntmachen. Damit hat ein Anwender die Möglichkeit, ein Technologieobjekt in der Oberfläche des Erstellsystems flexibel zu parametrieren.

Dadurch, daß auch Sprachmechanismen zuladbar sind, ist es möglich, daß dynamisch der Befehlsvorrat des Run-Time-Systems erweitert werden kann. In einem Anwenderprogramm kann der Anwender einen solchen zugeladenen Befehl in der Form verwenden, als wäre er ein Befehl der Grundfunktionalität. Wenn ein Anwenderprogramm mit einem solchen zugeladenen Befehl innerhalb einer Anwenderebene des Ablaufebenenmodells abgearbeitet wird, wird bei Aufruf dieses zugeladenen Befehls die dazugehörige Codesequenz des Betriebssystems auf einer der Systemebenen des Ablaufebenenmodells abgearbeitet. Dies geschieht ohne Zutun des Anwenders. Durch die Zuordnung von Deklarations- und Beschreibungsteilen zu den Code-Teilen des Technologiepaketes wird die Flexibilität für den Anwender weiterhin erhöht.

Ein Ausführungsbeispiel der Erfindung ist in der Zeichnung dargestellt und wird im folgenden erläutert.

Dabei zeigen:
- FIG 1: die Steuerung eines technischen Prozesses mit getrennter speicherprogrammierbarer Steuerung und Bewegungssteuerung. Die Programmierung erfolgt über jeweils separate Programmiersysteme,
- FIG 2: die wesentlichen Ablaufebenen einer klassischen speicherprogrammierbaren Steuerung,
- FIG 3: die wesentlichen Ablaufebenen einer Bewegungssteuerung,
- FIG 4: eine universelle Steuerung, d.h. eine kombinierte SPS/NC-Steuerung mit einem dazugehörigen Programmiersystem,
- FIG 5: das Ablaufebenenmodell der universellen Steuerung,
- FIG 6: zeigt als OO(objektorientiert)-Strukturdiagramm ein Technologiepaket, bestehend aus Code-Anteil, Parameter, Firmware-Konfiguration, Technologieobjekttyp, Sprachkomponente und Deklarationsteil,
- FIG 7: zeigt als OO-Strukturdiagramm Technologieobjekttypen für das Technologiepaket Kunststoff und
- FIG 8: zeigt, wie aus einer Datenquelle die Beschreibungsbzw. Parametrierinformationen über einen Umsetzer dem Engineering-System, dem Run-Time-System und einem Ausgabemedium zur Verfügung gestellt werden.

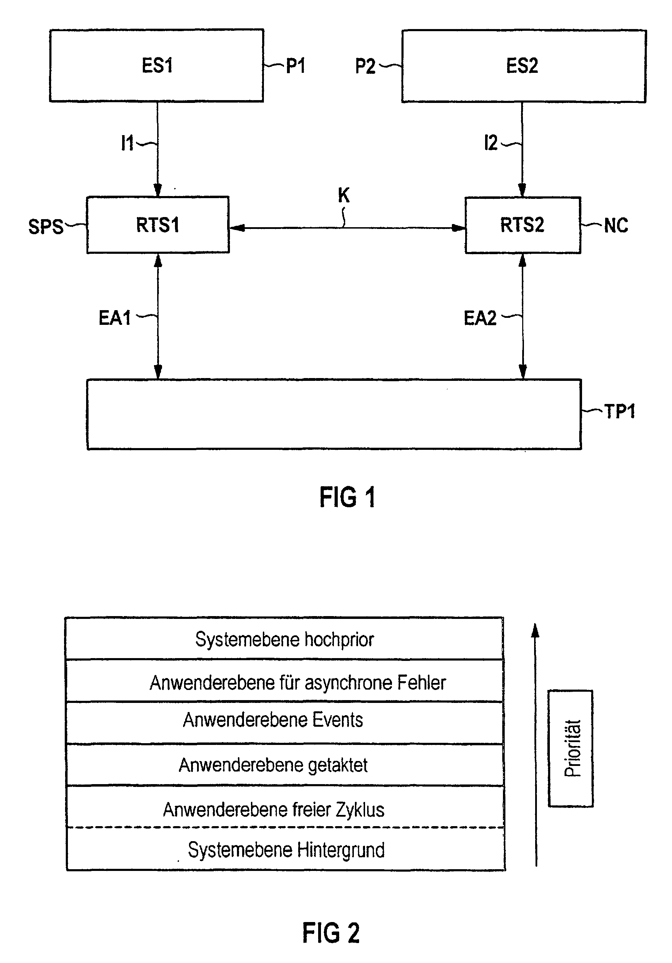

In der Darstellung gemäß FIG 1 wird, in Form eines Strukturbildes gezeigt, daß zur Steuerung eines technischen Prozesses TP1 ein paralleler Betrieb einer speicherprogrammierbaren Steuerung SPS und einer Bewegungssteuerung NC stattfindet. Speicherprogrammierbare Steuerung SPS und Bewegungssteuerung NC enthalten jeweils ein Run-Time-System RTS1 bzw. RTS2. Die Kommunikation zwischen den beiden Steuerungen erfolgt über spezielle Hilfsmittel, exemplarisch dargestellt ist ein bidirektionaler Kommunikationskanal K. Die Programmierung der Steuerungen durch den Anwender erfolgt in der Regel in unterschiedlichen Programmiersprachen mit unterschiedlichen Erstelloberflächen. Das heißt, durch jeweils separate Programmier- oder Engineering-Systeme P1, ES1 und P2, ES2. Der wesentliche Nachteil dieser konventionellen Ausführung liegt zum einen in der aufwendigen Kommunikation zwischen den beiden Steuerungen, zum anderen in den separaten und unterschiedlichen Programmier- bzw. Engineering-Systemen P1, ES1 und P2, ES2. Über Ein- und Ausgänge EA1, EA2 der Steuerungen wird der eigentliche technische Prozeß TP1 gesteuert. Zwischen dem Programmiersystem P1 und der speicherprogrammierbaren Steuerung SPS bzw. zwischen dem Programmiersystem P2 und der numerischen Steuerung NC befinden sich Informationspfade I1 bzw. I2, auf denen die Programme in die jeweilige Steuerung geladen werden.

In der Darstellung gemäß FIG 2 sind die wesentlichen Ablaufebenen einer klassischen speicherprogrammierbaren Steuerung (SPS; FIG 1), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund", im Round-Robin-Verfahren, also zeitscheibengesteuert, abgewickelt. Der Hintergrund-Systemebene sind z.B. Kommunikationsaufgaben zugeordnet. Bei einer folgenden getakteten Anwenderebene, bezeichnet als "Anwenderebene getaktet", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne daß das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.

Auf die "Anwenderebene getaktet" folgt eine "Anwenderebene Events". Die Reaktion auf externe oder interne Ereignisse (Events) erfolgt innerhalb der "Anwenderebene Events". Ein typisches Beispiel für ein solches Ereignis ist das Überschreiten eines Grenzwerts. In einer "Systemebene hochprior" liegen Aufgaben des Betriebssystems, welche die Arbeitsweise der speicherprogrammierbaren Steuerung sicherstellen.

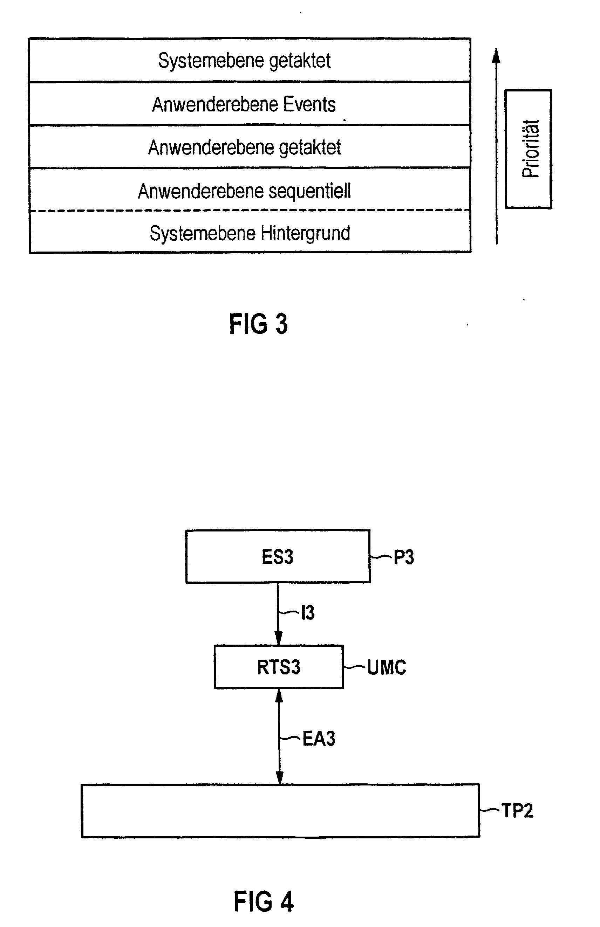

Die Darstellung gemäß FIG 3 zeigt die wesentlichen Ablaufebenen einer Bewegungssteuerung (NC; FIG 1). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequenziell" haben eine gleiche Priorität, nämlich die niedrigste. Diese aufgabenmäßige Zusammengehörigkeit ist wie bei FIG 2 durch eine gestrichelte Linie symbolisiert. Die Tasks der "Anwenderebene sequenziell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequenziell" laufen die vom Anwender programmierten Programmteile für die eigentliche Steuerungsaufgabe. Stößt die Steuerung in einem dieser Programmteile auf einen Bewegungs- oder Positionierbefehl, wird ein Suspend gesetzt, d.h. das Anwenderprogramm wird an dieser Stelle unterbrochen. Die Abarbeitung dieses Bewegungs- oder Positionierbefehls geschieht in einer höchstprioren "Systemebene getaktet". Ein jeder Lageregler, der in der "Systemebene getaktet" abläuft, führt diesen Bewegungs- bzw. Positionierbefehl aus. Nach Ausführung des Befehls wird in die "Anwenderebene sequenziell" zurückgesprungen und das durch Suspend unterbrochene Anwenderprogramm wird durch ein Resume an der gleichen Stelle fortgesetzt. Die "Systemebene getaktet" enthält neben den schon erwähnten Lagereglern auch den Interpolationsteil der Steuerung.

Auf die niederpriorste Ebene setzt eine "Anwenderebene getaktet" auf. Hier laufen zyklische Tasks ab, z.B. Reglerfunktionalitäten.

In einer folgenden "Anwenderebene Events" sind solche Tasks untergebracht, die auf externe oder interne Ereignisse reagieren. Solche Ereignisse können beispielsweise Alarme sein.

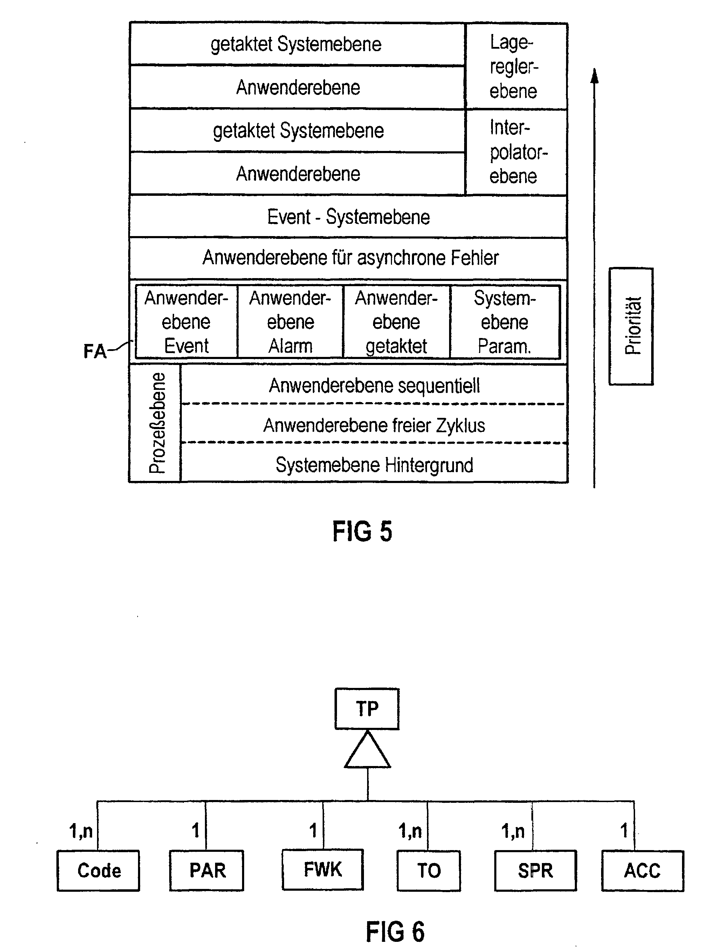

In der Darstellung gemäß FIG 4 wird ein technischer Prozeß TP2 durch eine kombinierte SPS/NC-Steuerung UMC gesteuert. Das Akronym UMC steht für UNIVERSAL-MOTION-CONTROL. Die Verbindung zwischen der Steuerung UMC und dem zugehörigen technischen Prozeß TP2 geschieht bidirektional über Ein-/Ausgänge EA3. Die Programmierung der kombinierten SPS/NC-Steuerung geschieht über ein gemeinsames Programmier- P3 oder Engineering-System ES3, wobei das Engineering-System ES3 ebenso wie bei FIG 1 eine komfortable Oberfläche für das Programmiersystem P3 zur Verfügung stellt. Die damit erstellten Programme werden über einen Informationspfad I3 in ein Run-Time-System RTS3 der universellen Bewegungssteuerung UMC übertragen. Die Darstellung gemäß FIG 5 zeigt das Ablaufebenenmodell der universellen Bewegungssteuerung. Die Priorisierung der Ebenen wird wie im vorangegangenen durch einen Pfeil in Richtung zur höchsten Priorität angedeutet. Die niederpriorste Ebenengruppe ist die sogenannte "Ebenengruppe Hintergrund-Bearbeitung". Sie besteht aus einer "Systemebene Hintergrund", aus einer "Anwenderebene freier Zyklus" und aus einer "Anwenderebene sequenziell". Die Tasks dieser drei gleichprioren Ebenen (angedeutet durch die gestrichelten Grenzlinien) werden zyklisch im Round-Robin-Verfahren abgearbeitet. Eine auf die "Ebenengruppe Hintergrund-Bearbeitung" höherprior folgende "Ablaufebene" ist eine vom Anwender anforderungsspezifisch frei projektierbare Anwenderebene FA, durch doppelte Umrandung gekennzeichnet, für Alarm- und/oder Event- und/oder Regelungsund/oder sonstige zyklische Tasks. Diese Anwenderebene FA besteht somit explizit aus vier Typen von Ebenen, die wiederum hinsichtlich ihrer Prioritäten innerhalb der Anwenderebene FA vom Anwender staffelbar sind.
Typ 1: Anwenderebene Event
Typ 2: Anwenderebene Alarm
Typ 3: Anwenderebene getaktet
Typ 4: Systemebene parametriert

Ebenen dieser Typen können vom Anwender frei wählbar innerhalb der Anwenderebene FA, mit jeweils zugrunde gelegten, vom Anwender vergebbaren Prioritäten, angeordnet werden. Damit hat der Anwender die Möglichkeit, eine den Anforderungen und Randbedingungen der Steuerungsaufgabe und des zu steuernden technischen Prozesses optimale Ausprägung der universellen Bewegungssteuerung zu erreichen.

In der "Anwenderebene Event" sind z.B. Tasks angeordnet, die auf Eingänge der Peripherie reagieren. In der "Anwenderebene Alarm" sind z.B. Tasks angeordnet, die auf Grenzwertüberwachungen reagieren. In der "Anwenderebene getaktet" sind zyklische anwenderprogrammierbare Tasks enthalten. In die "Systemebene parametriert" können von außen zuladbare Programme integriert werden. Dadurch ist es möglich, daß die universelle Bewegungssteuerung dynamisch um zusätzliche technologische Funktionalitäten erweitert werden kann. In diese "Systemebene parametriert" werden üblicherweise Tasks für langsame Regelungs- bzw. Überwachungsaufgaben (z.B. Aufgaben mit Zykluszeiten im Bereich von 100 ms) zugeladen.

Die nächsthöherpriore Ebene im Ablaufebenenmodell der universellen Bewegungssteuerung ist eine "Anwenderebene für asynchrone Fehler". In dieser Ebene kann der Anwender, ähnlich wie bei einer speicherprogrammierbaren Steuerung, die Behandlung von Fehlerzuständen ausprogrammieren. In der "Anwenderebene für asynchrone Fehler" sind z.B. Tasks angesiedelt, die auf technologische Alarme reagieren. Der Anwender hat auch die Möglichkeit, innerhalb dieser "Anwenderebene für asynchrone Fehler" eine für die Produktausprägung spezifische Anzahl von Ebenen zu parametrieren. Der Übersichtlichkeit halber sind Einzelheiten hierzu in der Darstellung nicht gezeigt. Der Anwender kann somit bedarfsweise bestimmten Fehlerereignissen eine bestimmte Priorität zuordnen.

Als nächstes folgt die "Event-Systemebene". Die Tasks der "Event-Systemebene" reagieren auf kritische interne oder externe Ereignisse, wie z.B. Nothalt.

Die nächste Ebene ist eine "Interpolatorebene". Sie enthält eine "getaktete Systemebene" und eine "Anwenderebene".

Die höchstpriore Ebene ist die "Lagereglerebene". Auch sie enthält eine "getaktete Systemebene" und eine "Anwenderebene". Die Anwenderebenen der Lageregler- und Interpolatorebene enthalten Tasks, die im Lageregler- bzw. Interpolatortakt aufgerufen werden. Die Laufzeit dieser Tasks wird überwacht, das Überschreiten einer durch das System festgelegten Zeit führt zum Abbruch der Ebene und zum Auslösen eines asynchronen Fehlers in der "Anwenderebene für asynchrone Fehler".

Der Lageregler hat eine höhere Priorität als der Interpolator, d.h. der Lageregler kann nicht vom Interpolator unterbrochen werden, wobei der Lageregler aber den Interpolator unterbrechen kann.

Im Ablaufebenenmodell der universellen Bewegungssteuerung können prinzipiell innerhalb der einzelnen Ablaufebenen neben den bereits erwähnten, weitere priorisierende Schichtungen vorgesehen sein.

Die Darstellung gemäß FIG 6 zeigt als OO-Strukturdiagramm, wobei die Kardinalitäten durch eine gängige Ziffern-Notation angezeigt werden, ein Technologiepaket TP mit seinen Bestandteilen:
a) Ablauffähige Code-Teile (Code)
b) Parameter (PAR)
c) Firmware-Konfiguration (FWK)
d) Mindestens einem Technologieobjekttyp (TO)
e) Sprachmechanismen (SPR)
f) Deklarations- und Beschreibungsteil (ACC)

Die 1 bis n Code-Teile (z.B. C-Funktionen) werden beispielsweise für die Bewegungsführung oder die Lageregelung oder für eine andere Technologie verwendet. Die Code-Teile können unter anderem Befehle für Temperaturführung, Temperaturregelung oder für spezielle Technologien wie z.B. Pressen oder Kunststoffverarbeitung beinhalten. Wie diese Code-Teile im Ablaufebenenmodell der Steuerung in die Systemebenen eingehängt werden und in welcher Reihenfolge sie zur Abarbeitung, d.h. Ausführung, gelangen sollen, wird in der Firmware-Konfiguration FWK festgelegt. In dieser steht also die Information, in welche Systemebene ein Code-Teil integriert werden soll und wenn in einer Systemebene mehrere Code-Teile integriert sind, in welcher Reihenfolge diese Code-Teile abgearbeitet werden sollen.

Der Parameter-Teil PAR beinhaltet Oberflächen- und Bedienparameter für das Engineering-System (ES; FIG 1, FIG 4, FIG 8) als auch die Mechanismen für das Run-Time-System (RTS; FIG 1, FIG 4, FIG 8), die eine Parametrierung ermöglichen. Damit hat der Anwender die Möglichkeit, Instanzen von Technologieobjekttypen TO eines Technologiepaketes TP gemäß seinen Anforderungen zu parametrieren.

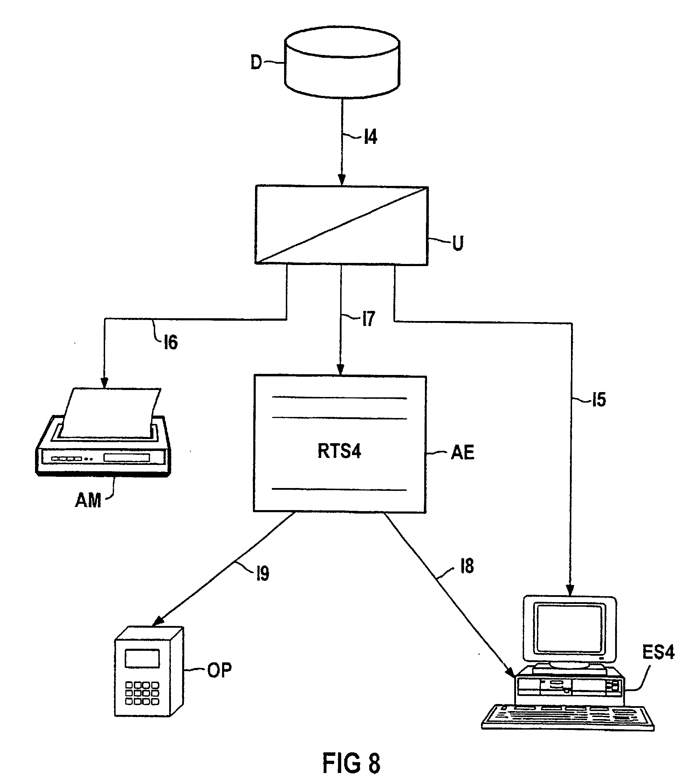

Mit Hilfe der 1 bis n Sprachmechanismen SPR eines Technologiepakets TP läßt sich der Sprachvorrat des Engineering-Systems (ES; FIG 1, FIG 4, FIG 8) um Befehle und Operatoren, die für das zugrundeliegende Technologiepaket TP mit seinen zugehörenden 1 bis n Technologieobjekttypen TO adäquat und sinnvoll sind, erweitern. Sprachmechanismen SPR müssen ins Engineering-System (ES; FIG 1, FIG 4, FIG 8) und ins Run-Time-System (RTS; FIG 1, FIG 4, FIG 8) der Steuerung geladen werden. Nachdem solche Sprachmechanismen (z.B. "erhöhe Temperatur") im Engineering-System (ES; FIG 1, FIG 4, FIG 8) installiert wurden, sind sie im Compiler und in der Oberfläche bzw. im Browser des Engineering-Systems (ES; FIG 1, FIG 4, FIG 8) bekannt und können vom Anwender in seinen Anwenderprogrammen direkt verwendet werden. Durch eine Plug & Play-Technologie wird sichergestellt, daß im Engineering-System (ES; FIG 1, FIG 4, FIG 8) bekannte Sprachmechanismen auch als ablauffähiges Codestück im Run-Time-System (RTS; FIG 1, FIG 4, FIG 8) vorhanden sind. Der Anwender verwendet also die Spezifikation der Sprachmechanismen, um die Implementierung im Run-Time-System (RTS; FIG 1, FIG 4, FIG 8) braucht er sich nicht mehr zu kümmern. In der später noch behandelten FIG 8 wird das Zusammenspiel von Zuladen, Verwenden und Abarbeiten von Sprachmechanismen SPR von Technologiepaketen TP genauer erläutert werden.

Zurück zu FIG 6: In der ACC-Komponente eines Technologiepakets TP befindet sich die Beschreibung aller Sprachelemente, die das Technologiepaket TP enthält, die Beschreibung aller Systemvariablen und aller Typen, die im Technologiepaket TP verwendet werden. Die ACC-Komponente entspricht somit einem Deklarations- und Beschreibungsteil für das Technologiepaket TP. Diese ACC-Komponente wird in erster Linie ins Run-Time-System (RTS; FIG 1, FIG 4, FIG 8) der Steuerung geladen. Dadurch wird sichergestellt, daß sich alle Informationen bzgl. vorhandener Technologiepaketen TP und Technologieobjekttypen TO im Run-Time-System der Steuerung befinden und somit der Anschluß von Bedien- und Beobachtungsgeräten (z.B. Operator Panels) sehr leicht möglich ist.

Nachfolgende Tabelle zeigt, wohin die Bestandteile des Technologiepakets TP innerhalb der Steuerung geladen werden: entweder ins Engineering-System (ES; FIG 1, FIG 4, FIG 8) oder ins Run-Time-System (RTS; FIG 1, FIG 4, FIG 8) oder sowohl ins Engineering-System (ES; FIG 1, FIG 4, FIG 8) als auch ins Run-Time-System (RTS; FIG 1, FIG 4, FIG 8).

| **Bestandteil** | **TP- Komponente** | **wird geladen in:** |
|---|---|---|
| ablauffähiger Code | Code | RT |
| Parametrieroberfläche (und entsprechendes Wissen über die einzelnen Parameter) | PAR | ES |
| Konfigurations-Informationen (Informationen, wie und wo die Teile in das Ablaufsystem eingeklinkt werden) | FWK | ES + RT |
| Anwenderschnittstelle (Befehle (MOVE, POS, ...), SFCs, SFBs, Systemvariablen, ...) | SPR | ES + RT |
| Anwenderschnittstelle (graphische Informationen) | SPR | ES |
| Beschreibungsinformationen für Systemvariablen, Alarme, ... | ACC | ES + RT |
| Objekttypen (Technologische Objekte) | TO | ES + RT |
| Versionsinformationen für Konsistenz zwischen RT, Paketen und Objekten | ACC | ES + RT |

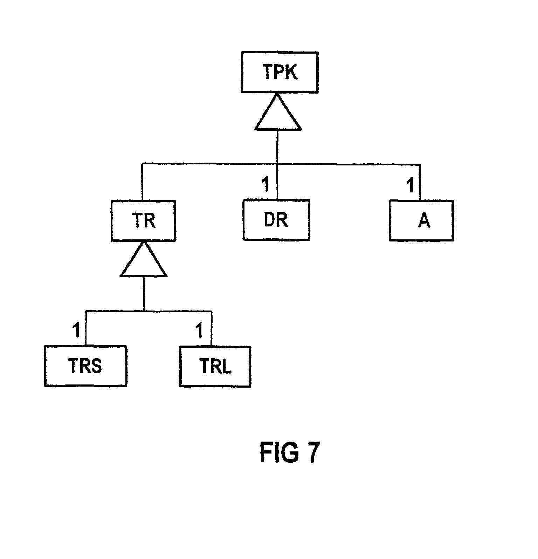

In der Darstellung gemäß FIG 7 werden als OO-Strukturdiagramm exemplarisch mögliche Technologieobjekttypen (TO; FIG 6) für ein Technologiepaket (TP; FIG 6) Kunststoff TPK dargestellt. Bei der Kunststoffbearbeitung bzw. -erzeugung benötigt man üblicherweise eine Temperaturregelung und eine Druckregelung. Der Druck, der dann auch durch den Druckregler DR geregelt werden muß, wird üblicherweise durch eine einfache Achse A aufgebaut, indem die Achse die Materialpaste zusammenpreßt. Für die Temperaturregelung sind in diesem Beispiel zwei Temperaturregler vorgesehen, ein schneller Temperaturregler TRS und ein langsamer Temperaturregler TRL. Wie aus dem OO-Strukturdiagramm ersichtlich, leiten leiten sich der langsame Temperaturregler TRL und der schnelle Temperaturregler TRS aus dem allgemeinen Temperaturregler TR ab. Die beiden Temperaturregler TRS und TRL, der Druckregler DR und die Achse A werden in dem vorliegenden Technologiepaket Kunststoff durch vier Technologieobjekttypen TO repräsentiert, nämlich TRS, TRL, DR und A. Durch die Kardinalität (Ziffer 1) wird angedeutet, daß bei diesem Beispiel genau ein schneller TRS und ein langsamer Temperaturregler TRL, sowie genau ein Druckregler DR und eine Achse A verwendet werden. Hinter dem schnellen Temperaturregler TRS kann sich z.B. ein PID-Regler, hinter dem langsamen Temperaturregler TRL kann sich z.B. ein P-Regler verbergen, das sind aber Implementierungsdetails, die einen Anwender der Funktionalitäten dieser Technologieobjekttypen im Engineering-System (ES; FIG 1, FIG 4, FIG 8) verwendet, nicht zu interessieren brauchen. Ein Anwender kann somit die Funktionalitäten dieser Technologieobjekttypen (TO; FIG 6) im Engineering-System (ES; FIG 1, FIG 4, FIG 8) verwenden, ohne sich um Implementierungsdetails kümmern zu müssen.

In der Darstellung gemäß FIG 8 wird gezeigt, daß aus einer Datenquelle D, die Beschreibungsinformationen für Systemvariablen sowie gegebenenfalls Alarme und/oder Sprachbefehle enthält, über den Informationspfad I4 an den Umsetzer U übermittelt werden. Der Umsetzer U generiert aus den eingespeisten Daten Parametrierinformationen für das Engineering-System ES4, für das Ausgabemedium AM und für das Run-Time-System RTS4. Der Umsetzer U wird vor der Compilierung der Run-Time- bzw. Enginering-System-Software aufgerufen. Er erzeugt Sourcen, die dann bei der Erzeugung der Run-Time- bzw. Engineering-System-Software compiliert werden. Auf dem Informationspfad I5 werden vom Umsetzer U die Parametrierinformationen zum Engineering-System ES4 transferiert. Die vom Umsetzer U erzeugten Parametrierinformationen für die Dokumentation werden über den Informationspfad I6 an das Ausgabemedium AM, in FIG 8 dargestellt durch einen Drucker, weitergeleitet. Als Ausgabemedium ist aber auch beispielsweise eine Online-Hilfe am Bildschirm vorstellbar. Die vom Umsetzer generierte Parametrierinformation für das Run-Time-System wird über den Informationspfad I7 in das Ablaufebenenmodell AE des Run-Time-Systems RTS4 geladen.

Der Umsetzer U wird immer dann aufgerufen, wenn er aus der Datenquelle D über den Informationspfad I4 neue Parametrierinformation erhält. Der Umsetzer U erzeugt in einem solchen Fall neue Sourcen für die Dokumentation, das Run-Time-System RTS4 und für das Engineering-System ES4.

Beim Betrieb der Steuerung werden die ins Engineering-System ES4 geladenen Systemvariablen vom Run-Time-System RTS4 über den Informationspfad I8 mit aktuellen Daten des technischen Prozesses versorgt. Der Anwender hat die Möglichkeit, bezugnehmend auf den aktuellen Zustand des technischen Prozesses (TP1, TP2; FIG 1 bzw. FIG 4) weitere Eingaben am Engineering-System ES4 durchzuführen.

Über den Informationspfad I9 kann das Run-Time-System RTS4 ein Gerät zum maschinennahen Überwachen und Steuern (in FIG 8 dargestellt durch ein Operator Panel OP) mit Informationen (z.B. Alarmen) versorgen.

Der Umsetzer U tritt beim Betrieb der Steuerung nicht mehr in Erscheinung. Die Informationspfade I4, I5, I6 und I7 werden bei der Erzeugung der Steuerungssoftware verwendet, aber nicht beim Betrieb der Steuerung. Beim Betrieb der Steuerung werden die Informationspfade I8 und I9 verwendet.

## Patentansprüche

1. Universelle Bewegungssteuerung mit Engineering- und Run-Time-System, welche funktionell die klassischen Aufgaben einer speicherprogrammierbaren Steuerung und einer numerischen Steuerung in sich vereinigt,
**dadurch gekennzeichnet,**
**daß** ein einheitliches Ablaufebenenmodell (AE) dergestalt gebildet ist, daß es mehrere Ablaufebenen unterschiedlichen Typs mit unterschiedlicher Priorität aufweist, wobei von höchster bis niedrigster Priorität verschiedene Anwender- und Systemebenen vorgesehen sind und daß jeweils Technologiepakete (TP) anwenderseitig in das Engineering- und/oder Run-Time-System (ES1-ES4, RTS1-RTS4) ladbar sind, daß eine Datenquelle (D) für Beschreibungsinformationen für Systemvariablen sowie gegebenenfalls Alarme und/oder Sprachbefehle über einen Umsetzer (U) dem Engineering-System (ES1-ES4) Sprachbefehle und/oder Systemvariablen zur Verfügung stellt, daß aus dem Run-Time-System (RTS1-RTS4) die Systemvariablen mit aktuellen Daten des technischen Prozesses (TP1, TP2) versorgbar sind und daß über eine Bedienoberfläche des Engineering-Systems (ES1-ES4) weitere Eingaben anwenderseitig machbar sind.

2. Universelle Bewegungssteuerung nach Anspruch 1,
**dadurch gekennzeichnet,**
**daß** vom Umsetzer (U) aus dem Bestand der Datenquelle (D) relevante Dokumentationsinformationen an ein Ausgabemedium (AM) weiterleitbar sind.

3. Universelle Bewegungssteuerung nach einem der vorstehenden Ansprüche,
**dadurch gekennzeichnet,**
**daß** als Ablaufebenen vorgesehen sind:
a) eine Lagereglerebene, bestehend aus zugehöriger getakteter Systemebene und Anwenderebene,
b) eine Interpolatorebene, bestehend aus zugehöriger getakteter Systemebene und Anwenderebene,
c) eine Event-Systemebene für reaktionspflichtige Ereignisse,
d) eine Anwenderebene für asynchrone Fehler
e) eine weitere, vom Anwender anforderungsspezifisch frei projektierbare Anwenderebene (FA) für Alarm- und/oder Event- und/oder Regelungs- und/oder sonstige zyklische Tasks,
f) eine aus der Abfolge von Bewegungssequenzen, freien Zyklen und niederprioren sonstigen Systemtasks, gebildete Ebenengruppe für Hintergrund-Bearbeitung,
wobei die Ablaufebenen a bis e eine Ebenengruppe für Echtzeit-Bearbeitung bilden.

4. Universelle Bewegungssteuerung nach einem der vorstehenden Ansprüche,
**dadurch gekennzeichnet,**
**daß** die Technologiepakete (TP) beinhalten:
a) Code-Teile, die die Regelungsspezifika für das Runtime-System (RTS1-RTS4) repräsentieren und
b) einen Konfigurierteil (FWK) der die Zuordnung dieser Code-Teile zu den jeweiligen Systemebenen, sowie deren Bearbeitungsfolge aufweist, wobei
c) bedarfsweise diese Informationen des Konfigurierteils (FWK) auch an das Engineering-System (ES1-ES4) weiterleitbar sind.

5. Universelle Bewegungssteuerung nach Anspruch 4,
**dadurch gekennzeichnet,**
**daß** die Informationen des Konfigurierteils (FWK) eines Technologiepaketes (TP) über die Datenquelle D und den Umsetzer U ins Run-Time-System (RTS1-RTS4) und ins Engineering-System (ES1-ES4) gebracht werden.

6. Universelle Bewegungssteuerung nach Anspruch 4 oder 5,
**dadurch gekennzeichnet,**
**daß** jedes Technologiepaket (TP) eine angepaßte Anzahl von Technologieobjekttypen (TO) für das Run-Time-System (RTS1-RTS4) beinhaltet.

7. Universelle Bewegungssteuerung nach Anspruch 4, 5 oder 6,
**dadurch gekennzeichnet,**
**daß** des weiteren Bedienoberflächeninformationen, insbesondere Bedienparameter (PAR), und/oder Sprachmechanismen (SPR) und/oder Deklarationsteile (ACC) den Code-Teilen zuweisbar sind.

## Claims

1. Universal motion controller having an engineering system and a run time system, and that functionally combines the classic tasks of a programmable logic controller and a numerical controller, **characterised in that** a uniform run level model (AE) is formed such that it has a plurality of run levels of different types having differing priorities, different user levels and system levels from highest to lowest priority being provided, and **in that** in each case technology packages (TP) can be loaded by the user into the engineering system and/or run time system (ES1-ES4, RTS1-RTS4), that a data source (D) for description information for system variables as well as if needed alarms and/or commands makes available commands and/or system variables to the engineering system (ES1-ES4) via a converter (U), that system variables with current technical process data (TP1, TP2) can be supplied from the run time system (RTS1-RTS4), and that further inputs can be made by the user via a user interface of the engineering system (ES1-ES4).

2. Universal motion controller according to Claim 1, **characterised in that** relevant documentation information can be forwarded by the converter (U) from the data source (D) to an output medium (AM).

3. Universal motion controller according to one of the preceding claims, **characterised in that** the following are provided as run levels:
a) a position control level, comprising an associated clocked system level and user level,
b) an interpolator level, comprising an associated clocked system level and user level,
c) an event system level for events requiring a response,
d) a user level for asynchronous errors,
e) a further user level (FA) that is freely plannable by the user in accordance with specific requirements, for alarm tasks and/or event tasks and/or control tasks and/or other cyclical tasks,
f) a group of levels, formed from the series of motion sequences, free cycles and other low-priority system tasks, for background processing,
wherein a level group for real-time processing comprises run levels a to e.

4. Universal motion controller according to one of the preceding claims, **characterised in that** the technology packets (TP) comprise:
a) code parts that represent controller specifics for the run time system (RTS1-RTS4) and
b) a configuration part (FWK) that exhibits the allocation of those code parts to each of the system levels, as well as the sequence of their processing, wherein
c) this information of the configuration part (FWK) is also forwarded as needed to the engineering system (ES1-ES4).

5. Universal motion controller according to Claim 4, **characterised in that** the information of the configuration part (FWK) of a technology packet (TP) is delivered to the run time system (RTS1-RTS4) and to the engineering system (ES1-ES4) via the data source D and the converter U.

6. Universal motion controller according to Claim 4 or 5, **characterised in that** each technology packet (TP) comprises an adjusted number of technology object types (TO) for the run time system (RTS1-RTS4).

7. Universal motion controller according to Claim 4, 5 or 6, **characterised in that** user interface information, in particular operating parameters (PAR) and/or programming language features (SPR) and/or declaration parts (ACC) can further be allocated to the code parts.

## Revendications

1. Commande cinématique universelle avec système d'ingénierie et système d'exécution run-time, qui réunit fonctionnellement les tâches classiques d'une commande par programme enregistré et d'une commande numérique,
**caractérisée par le fait qu'**un modèle uniforme de niveaux d'exécution (AE) est formé de telle sorte qu'il comporte plusieurs niveaux d'exécution de différents types avec différentes priorités, différents niveaux d'utilisateur et de système étant prévus de la plus haute à la plus basse priorité, des paquets technologiques (TP) sont chargeables du côté de l'utilisateur dans le système d'ingénierie et/ou d'exécution run-time (ES1 à ES4, RTS1 à RTS4), une source de données (D) pour des informations de description destinées à des variables de système ainsi que le cas échéant à des alarmes et/ou à des instructions de langage met à disposition du système d'ingénierie (ES1 à ES4), via un convertisseur (U), des instructions de langage et/ou des variables de système, les variables de système peuvent être alimentées en données actuelles du processus technique (TP1, TP2) à partir du système d'exécution run-time (RTS1 à RTS4) et d'autres entrées peuvent être faites du côté de l'utilisateur par l'intermédiaire d'une interface d'utilisateur du système d'ingénierie (ES1 à ES4).

2. Commande cinématique universelle selon la revendication 1,
**caractérisée par le fait que**, à partir du convertisseur (U), des informations de documentation déterminant la consistance de la source de données (D) peuvent être retransmises à un moyen de sortie (AM).

3. Commande cinématique universelle selon l'une des revendications précédentes,
**caractérisée par le fait qu'**il est prévu comme niveaux d'exécution :
a) un niveau de réglage de position, constitué d'un niveau de système et d'un niveau d'utilisateur associés et soumis à une horloge,
b) un niveau d'interpolation, constitué d'un niveau de système et d'un niveau d'utilisateur associés et soumis à une horloge,
c) un niveau de système à événements pour des événements imposant une réaction,
d) un niveau d'utilisateur pour des erreurs asynchrones,
e) un autre niveau d'utilisateur (FA) pouvant être développé librement par l'utilisateur de manière spécifique aux exigences pour des tâches d'alarme et/ou d'événements et/ou de régulation et/ou d'autres tâches cycliques,
f) un groupe de niveaux, formé à partir de la succession de séquences cinématiques, de cycles libres et d'autres tâches de système peu prioritaires, pour un traitement à l'arrière-plan,
les niveaux d'exécution a à e formant un groupe de niveaux pour un traitement en temps réel.

4. Commande cinématique universelle selon l'une des revendications précédentes,
**caractérisée par le fait que** les paquets technologiques (TP) contiennent :
a) des parties codes, qui représentent les spécifications de régulation pour le système d'exécution run-time (RTS1 à RTS4) et
b) une partie configuration (FWK), qui comporte l'association de ces parties codes aux niveaux de système respectifs ainsi que leur ordre de traitement,
c) ces informations de la partie configuration (FWK) pouvant, si nécessaire, être retransmises aussi au système d'ingénierie (ES1 à ES4).

5. Commande cinématique universelle selon la revendication 4,
**caractérisée par le fait que** les informations de la partie configuration (FWK) d'un paquet technologique (TP) sont amenées par l'intermédiaire de la source de données (D) et du convertisseur (U) dans le système d'exécution run-time (RTS1 à RTS4) et dans le système d'ingénierie (ES1 à ES4).

6. Commande cinématique universelle selon la revendication 4 ou 5,
**caractérisée par le fait que** chaque paquet technologique (TP) contient un nombre adapté de types d'objets technologiques (TO) pour le système d'exécution run-time (RTS1 à RTS4).

7. Commande cinématique universelle selon la revendication 4, 5 ou 6,
**caractérisée par le fait que**, de plus, des informations d'interface d'utilisateur, notamment des paramètres de commande (PAR), et/ou des mécanismes de langage (SPR) et/ou des parties de déclaration (ACC) sont attribuables aux parties codes.
